# EUROPEAN PATENT APPLICATION

(11) **EP 3 037 942 A1**
(43) Date of publication of application: **29.06.2016**
(21) Application number: 14798324.1
(22) Date of filing: 15.05.2014
(51) Int. Cl.: G06F 3/0482, G06F 3/0488

(54) **MENU PROCESSING METHOD AND DEVICE**

(30) Priority: 21.08.2013 CN 201310368291
(71) Applicant: ZTE Corporation, Shenzhen, Guangdong 518057 (CN)
(72) Inventor: ZHOU, Zhong, Shenzhen Guangdong 518057 (CN); GONG, Le, Shenzhen Guangdong 518057 (CN); WANG, Tingting, Shenzhen Guangdong 518057 (CN); LUO, Chan, Shenzhen Guangdong 518057 (CN); HUANG, Ling, Shenzhen Guangdong 518057 (CN); LONG, Li, Shenzhen Guangdong 518057 (CN); HUI, Wenwu, Shenzhen Guangdong 518057 (CN)
(74) Representative: Carangelo, Pierluigi
(86) International application number: PCT/CN2014/077588
(87) International publication number: WO 2014/183661

(57) **Abstract**

The disclosure discloses a method and device for processing a menu. The method includes that: a first trigger signal is received, wherein the first trigger signal acts on a menu item of a primary menu displayed in a terminal screen; and in response to the first trigger signal, a secondary menu is invoked and displayed on the terminal screen, wherein the primary menu and the secondary menu are displayed on the terminal screen simultaneously. By means of the disclosure, a problem of inconvenience in an interface operation is solved, the operation efficiency of a user is increased, and the experience of the user is improved.

## Description

### Technical Field

The disclosure relates to the communications field, and in particular to a method and device for processing a menu.

### Background

With the development of a communication technology, mobile terminals (for example, mobile phones which are taken as an example for explanations below) have become extremely popular. Conventional mobile phone applications have various functions, menu interfaces are in diversified styles, and however, interfaces' setting are in relatively single styles, which are list interfaces, basically, adopting a layer-by-layer deepening mode. Users need to set interfaces downwards screen by screen, and then return to the interfaces needing to be set screen by screen for checking. In such a way, due to setting in other setting interfaces, the users may inconveniently see operation effects instantly, and cannot try many times well to select the most satisfied effects, the users access and operate a menu with more layers quite slowly, thereby being in a low efficiency and inconvenient.

Currently, an effective solution is not proposed for a problem of inconvenience in an interface design operation in the related art.

### Summary

The embodiments of the disclosure provide a method and device for processing a menu, so as at least to solve a problem of inconvenience in an interface operation.

According to one aspect of the embodiments of the disclosure, a method for processing a menu is provided, which may include that: receiving a first trigger signal, wherein the first trigger signal acts on a menu item of a primary menu displayed in a terminal screen; and in response to the first trigger signal, invoking a secondary menu, and displaying the secondary menu on the terminal screen, wherein the primary menu and the secondary menu are displayed on the terminal screen simultaneously.

In an example embodiment, the primary menu is displayed on the terminal screen in a line, and the secondary menu is displayed on the terminal screen in a column.

In an example embodiment, the primary menu and the secondary menu are crossways located on the menu item.

In an example embodiment, the method further comprises: receiving a second trigger signal; and in response to the second trigger signal, triggering the primary menu to move in a direction parallel to the line; and/or, receiving a third trigger signal; and in response to the third trigger signal, triggering the secondary menu to move in a direction parallel to the column.

In an example embodiment, the second trigger signal and/or the third trigger signal are trigger signals generated by sliding of a contact object on the terminal screen.

In an example embodiment, in response to the second trigger signal, a predetermined menu item in the primary menu is moved to a predetermined focus, wherein the movement of the predetermined menu item to the predetermined focus triggers the first trigger signal.

According to another aspect of the embodiment of the disclosure, a device for processing a menu is provided, which may include: a first receiving component, configured to receive a first trigger signal, wherein the first trigger signal acts on a menu item of a primary menu displayed in a terminal screen; and an invoking component, configured to invoke a secondary menu and display the secondary menu on the terminal screen in response to the first trigger signal, wherein the primary menu and the secondary menu are displayed on the terminal screen simultaneously.

In an example embodiment, the primary menu is displayed on the terminal screen in a line, and the secondary menu is displayed on the terminal screen in a column.

In an example embodiment, the primary menu and the secondary menu are crossways located on the menu item.

In an example embodiment, the device further comprises: a second receiving component, configured to receive a second trigger signal; and a first trigger component, configured to trigger, in response to the second trigger signal, the primary menu to move in a direction parallel to the line; and/or a third receiving component, configured to receive a third trigger signal; and a second trigger component, configured to trigger, in response to the third trigger signal, the secondary menu to move in a direction parallel to the column.

In an example embodiment, the second trigger signal and/or the third trigger signal are a trigger signals generated by sliding of a contact object on the terminal screen.

In an example embodiment, the first trigger component is configured to move, in response to the second trigger signal, a predetermined menu item in the primary menu to a predetermined focus, wherein the movement of the predetermined menu item to the predetermined focus triggers the first trigger signal.

By means of the embodiment of the disclosure, the first trigger signal is received, wherein the first trigger signal acts on the menu item of the primary menu displayed in a terminal screen; and in response to the first trigger signal, the secondary menu is invoked and displayed on the terminal screen, wherein the primary menu and the secondary menu are displayed on the terminal screen simultaneously, so that the problem of inconvenience in an interface operation is solved, the operation efficiency of a user is increased, and the experience of the user is improved.

### Brief Description of the Drawings

Drawings, provided for further understanding of the disclosure and forming a part of the specification, are used to explain the disclosure together with embodiments of the disclosure rather than to limit the disclosure. In the drawings:
Fig. 1 is a flowchart of a method for processing a menu according to an embodiment of the disclosure;
Fig. 2 is a structural diagram of a device for processing a menu according to an embodiment of the disclosure;
Fig. 3 is a first flowchart of a method for operating a cross interaction function menu based on an interface of a touch screen mobile phone according to an example embodiment of the disclosure;
Fig. 4 is a second flowchart of a method for operating a cross interaction function menu based on an interface of a touch screen mobile phone according to an example embodiment of the disclosure;
Fig. 5 is a topological structural diagram of a primary menu and a secondary menu according to an example embodiment of the disclosure;
Fig. 6 is a schematic diagram of a default state after a menu is carried out according to an example embodiment of the disclosure;
Fig. 7 is a schematic diagram of a primary menu in a state of sliding leftwards from a menu C to a menu D according to an example embodiment of the disclosure;
Fig. 8 is a schematic diagram of a primary menu in a state of sliding leftwards to a menu D according to an example embodiment of the disclosure;
Fig. 9 is a schematic diagram of a primary menu in a state of sliding leftwards to an end according to an example embodiment of the disclosure;
Fig. 10 is a schematic diagram of a primary menu in a state of sliding rightwards according to an example embodiment of the disclosure;
Fig. 11 is a schematic diagram of a secondary menu in a state of sliding upwards according to an example embodiment of the disclosure;
Fig. 12 is a schematic diagram of a secondary menu in a state of sliding in place according to an example embodiment of the disclosure;
Fig. 13 is a schematic diagram of a secondary menu in a state of sliding upwards to an end according to an example embodiment of the disclosure; and
Fig. 14 is a schematic diagram of a secondary menu in a state of sliding downwards according to an example embodiment of the disclosure.

### Detailed Description of the Embodiments

The disclosure is described below with reference to the accompanying drawings and embodiments in detail. Note that, the embodiments of the disclosure and the features of the embodiments may be combined with each other if there is no conflict.

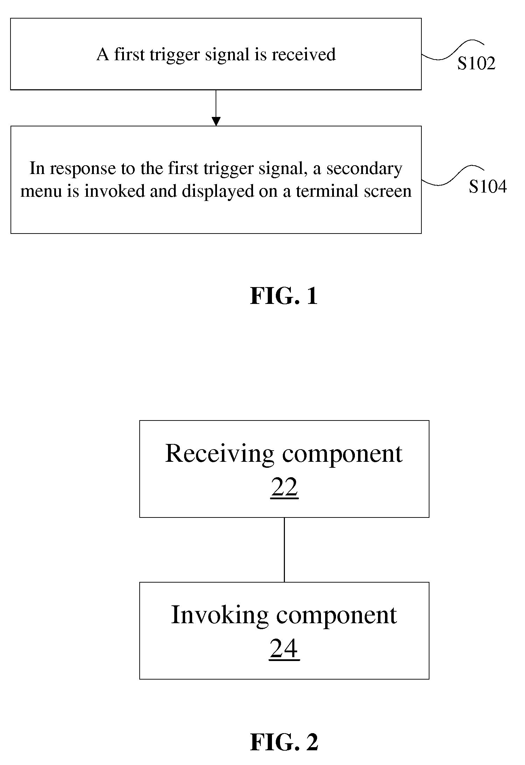

In an embodiment of the disclosure, a method for processing a menu is provided. Fig. 1 is a flowchart of a method for processing a menu according to an embodiment of the disclosure. As shown in Fig. 1, the method may include the following steps that:
Step S102: a first trigger signal is received, wherein the first trigger signal acts on a menu item of a primary menu displayed in a terminal screen; and
Step S104: in response to the first trigger signal, a secondary menu is invoked and displayed on the terminal screen, wherein the primary menu and the secondary menu are displayed on the terminal screen simultaneously.

By means of the above-mentioned steps, through receiving the first trigger signal which acts on the menu item of the primary menu displayed in a mobile terminal screen, and invoking the secondary menu and displaying the secondary menu on the terminal screen in response to the first trigger signal so as to display the primary menu and the secondary menu on the terminal screen simultaneously, a problem of inconvenience in an interface operation is solved, the operation efficiency of the user is increased, and the experience of the user is improved.

In this embodiment, the primary menu and the secondary menu can be displayed on the terminal screen in multiple modes simultaneously. In an example embodiment, the primary menu can be displayed on the terminal screen in a line, and the secondary menu can be displayed on the terminal screen in a column simultaneously. The primary menu and the secondary menu can be interchanged, that is, the secondary menu can be displayed on the terminal screen in the line, and the primary menu can be displayed on the terminal screen in the column simultaneously. In such a cross interaction display mode, menu functions are clear, the operation is directly performed in a current interface, and the functions are fed back immediately, thereby being convenient and easy to use, and easy to learn.

In an example embodiment, the primary menu and the secondary menu can be crossways located on a primary menu item. Thus, it can be more clearly shown that which menu item corresponds to the secondary menu.

In an example embodiment, if the primary menu or the secondary menu extends beyond a display part of a screen, a function of enabling the primary menu and/or the secondary menu to move can be provided. For example, a second trigger signal can be received; and in response to the second trigger signal, the primary menu is triggered to move in a direction parallel to a line. A third trigger signal can also be received; and in response to the third trigger signal, the secondary menu is triggered to move in a direction parallel to a column. A user can drag the primary menu and the secondary menu on the terminal screen in multiple modes. For example, a menu dragging direction can be determined by selecting direction keys. The menu can be dragged on a touch screen in a touch mode which may be a mode of dragging one menu by single-point touch or a mode of dragging a plurality of menus by multi-point touch. In an example embodiment, the second trigger signal and/or the third trigger signal are a trigger signals generated by sliding of a contact object on the terminal screen.

In an example embodiment, a position of a menu item can be set as a focus by the primary menu, and the secondary menu can be displayed only when a primary menu item moves to the position. Namely, in response to the second trigger signal, a predetermined menu item in the primary menu moves to a predetermined focus, wherein the predetermined menu item moves to the predetermined focus so as to trigger the first trigger signal. For example, a position of a second menu item of the primary menu is a position of displaying the secondary menu, and if a third menu item of the secondary menu is displayed as needed, the third menu item needs to move to the position of the original second menu item.

In this embodiment, a device for processing a menu is also provided, which are used to realize the above-mentioned method. Explanations have been performed in the abovementioned embodiment and example implementation modes, and a detailed description is unnecessary. It needs to be noted that the names of components in the device below do not form actual limits to the components. For example, a receiving component can be shown as "a component configured to receive a first trigger signal". Components below can be realized in a processor. For example, a first receiving component can be shown as "a processor configured to receive the first trigger signal" or "a processor including the first receiving component" and so on.

Fig. 2 is a structural diagram of a device for processing a menu according to an embodiment of the disclosure. As shown in Fig. 2, the device 20 includes: a first receiving component 22 and an invoking component 24. The structure is explained below.

The first receiving component 22 is configured to receive a first trigger signal, wherein the first trigger signal acts on a menu item of a primary menu displayed in a terminal screen.

The invoking component 24 is configured to invoke a secondary menu and display the secondary menu on the terminal screen in response to the first trigger signal, wherein the primary menu and the secondary menu are displayed on the terminal screen simultaneously.

By means of the components, the first receiving component 22 can receive the first trigger signal which acts on the menu item of the primary menu displayed in a mobile terminal screen, and the invoking component 24 invokes the secondary menu and displays the secondary menu on the terminal screen in response to the first trigger signal so as to display the primary menu and the secondary menu on the terminal screen simultaneously, so that the problem of inconvenience in an interface operation is solved, the operation efficiency of the user is increased, and the experience of the user is improved.

In an example embodiment, the device further includes: a second receiving component, configured to receive a second trigger signal; a first trigger component, configured to trigger, in response to the second trigger signal, the primary menu to move in a direction parallel to a line; and/or, a third receiving component, configured to receive a third trigger signal; and a second trigger component, configured to trigger, in response to the third trigger signal, the secondary menu to move in a direction parallel to a column.

In an example embodiment, the first trigger component is configured to move, in response to the second trigger signal, a predetermined menu item in the primary menu to a predetermined focus, wherein the movement of the predetermined menu item the predetermined focus triggers the first trigger signal.

The disclosure is explained below with reference to example embodiments and example implementation modes.

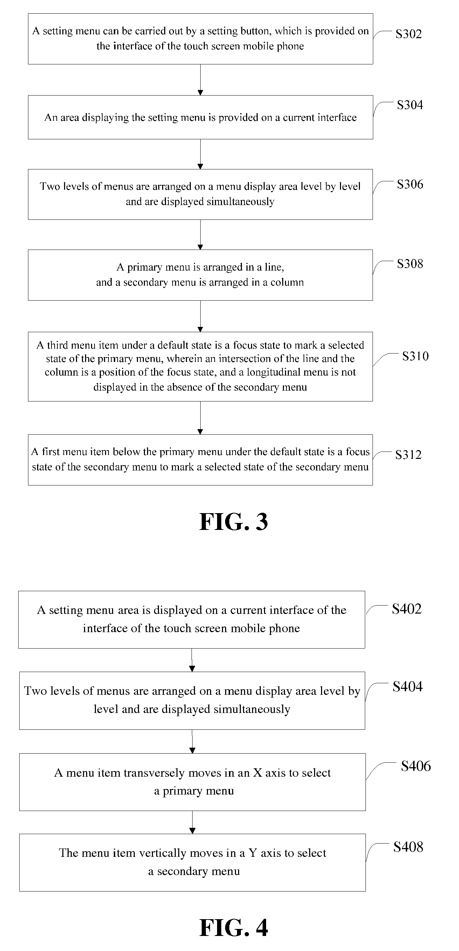

Fig. 3 is a first flowchart of a method for operating a cross interaction function menu based on an interface of a touch screen mobile phone according to an example embodiment of the disclosure. As shown in Fig. 3, the method includes the following steps that:
Step S302: a setting menu can be carried out by a setting button, which is provided on the interface of the touch screen mobile phone;
Step S304: an area displaying the setting menu is provided on a current interface;
Step S306: two levels of menus are arranged on a menu display area level by level and are displayed simultaneously;
Step S308: a primary menu is arranged in a line, and a secondary menu is arranged in a column, wherein when the number of primary menu items exceeds the menu display area, contents which cannot be displayed are hidden, hidden menu items move in and out in a finger sliding mode, a top-level menu arranged in a line is set as the primary menu which is arranged longitudinally level by level according to a focus item of the primary menu, and the secondary menu is displayed simultaneously;
Step S310: a third menu item under a default state is a focus state to mark a selected state of the primary menu, wherein an intersection of the line and the column is a position of the focus state, and a longitudinal menu is not displayed in the absence of the secondary menu; and
Step S312: a first menu item below the primary menu under the default state is a focus state of the secondary menu to mark a selected state of the secondary menu.

By means of the above-mentioned steps, the example embodiment provides the method for operating the cross interaction function menu based on the interface of the touch screen mobile phone. Furthermore, according to the method, the menu items moving in the menu display area are displayed in sequence, the menu items moving out of the menu display area are hidden in sequence, and the primary and secondary menu items can be represented by texts or pictures. When the menu items are slid via a mobile phone, the menu items needing to be selected are slid to a fixed position of an appointed focus state, and functions of a current menu are triggered. Moreover, as long as the functions are triggered, the interface will immediately give a feedback by itself, and secondary confirmation is not needed.

The example embodiment provides a menu style. The primary menu and the secondary menu are enabled to be displayed in a screen simultaneously, menu selection is realized in a humanized operation mode of sliding a menu to a focus state via a finger, any levels and any menu items can be switched quite conveniently and quickly, the secondary menu can be selected, and the interface immediately gives a feedback, thereby being quite convenient for a user interface needing a great number of setting functions, providing the user with a very visual menu display and operation mode, avoiding troubles of screen-by-screen searching and screen-by-screen returning, increasing the operation speed of the user and improving the operation favour of the user. Moreover, all setting operations are executed in the same interface, gestures are fluent, interactions are comfortable, a great enjoyment is provided for the user, the operation time of the user is shortened, and the experience of the user is improved.

Fig. 4 is a second flowchart of a method for operating a cross interaction function menu based on an interface of a touch screen mobile phone according to an example embodiment of the disclosure. The method for processing the menus provided by the example embodiment is a method for displaying two levels of setting menus based on the interface of the touch screen mobile phone simultaneously, which is executed on a processor of the touch screen mobile phone via software and is realized by sliding of menu items via the mobile phone based on a touch screen. As shown in Fig. 4, the method includes the following steps that:
Step S402: a setting menu area is displayed on a current interface of the interface of the touch screen mobile phone, wherein a touch screen of the touch screen mobile phone capable of displaying a menu is provided, a software execution link for realizing the method is provided, which refers to a known environment such as a processor without detailed descriptions, a software running environment is provided, and the menu in the disclosure is carried out via a setting button;
Step S404: two levels of menus are arranged on a menu display area level by level and are displayed simultaneously;
Step S406: a menu item transversely moves in an X axis to select a primary menu; and
Step S408: the menu item vertically moves in a Y axis to select a secondary menu.

By means of the above-mentioned steps, two levels of setting menus are simultaneously displayed based on the interface of the touch screen mobile phone.

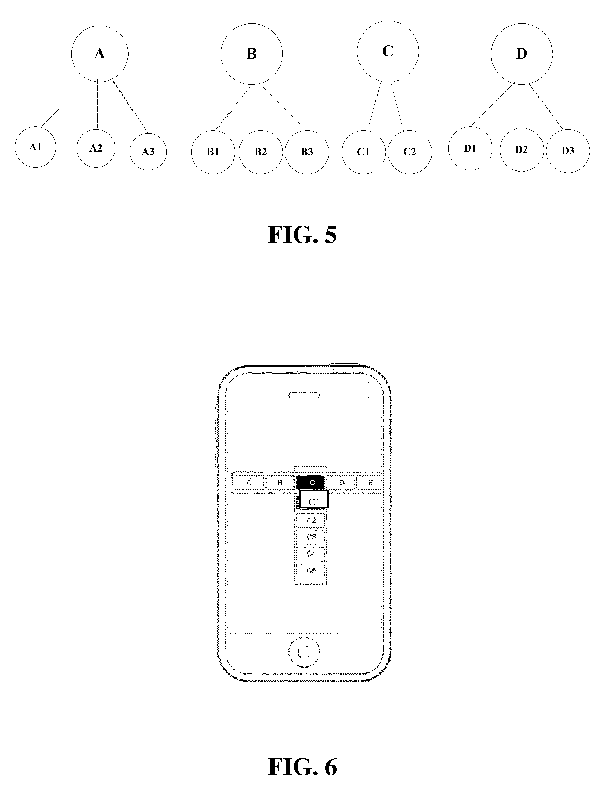

Fig. 5 is a topological structural diagram of a primary menu and a secondary menu according to an example embodiment of the disclosure. As shown in Fig. 5, primary menus include: A, B, C and D; a primary menu A includes secondary menus A1, A2 and A3; a primary menu B includes secondary menus B1, B2 and B3; a primary menu C includes secondary menus C1 and C2; and a primary menu D includes secondary menus D1, D2 and D3.

It is simulated, based on a menu result according to the example embodiment, that the primary menus are expressed via sequential letters namely A, B, C, D and E, and the secondary menus corresponding to the primary menus are expressed via sequential numbers such as A1, A2, A3 and A4. By clicking setting buttons, menu options are carried out. The primary and secondary menus needing to be displayed are arranged and displayed simultaneously level by level within a screen viewable range by software setting, can be displayed in a text form, can be represented in an icon form or can be represented in a form of combining icons and texts. According to the disclosure, two levels of menus are clearly displayed within a screen range, thereby providing direct visual perceptions for the user, and increasing the operation speed of the user.

Fig. 6 is a diagram of a default state after a menu is carried out according to an example embodiment of the disclosure. As shown in Fig. 6, all primary menus are displayed in a line by software setting, and a top-level menu is set as a primary menu and is displayed at a top-priority position. When the number of primary menu items exceeds a menu display area, contents which cannot be displayed are hidden, and hidden menu items move in and out in a finger left-right sliding mode. As shown in Fig. 6, menus A, B, C, D, E and F which are transversely displayed on a screen are primary menus which are arranged vertically in the same screen according to a focus item C of the primary menu, and subsequent menus C1, C2, C3, C4 and C5 are displayed simultaneously. When the number of secondary menu items exceeds the menu display area, contents which cannot be displayed are hidden, and hidden menu items move in and out in a finger up-down sliding mode. The width and height of a single menu item are fixed, and menu contents can only be displayed within a range of the menu. Namely, the widths of a menu A and a menu B are fixed, and a name of the menu A is displayed within the range of the menu A and a name of the menu B is displayed within the range of the menu B.

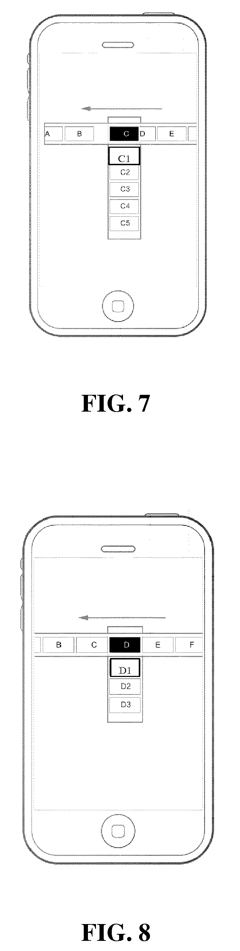

The primary menus are selected by left-right sliding of a finger so as to make the menu items move to reach assigned focuses. As shown in Fig. 6, a selected item of the primary menus in a current default state is C, and the secondary menus of a menu C are C1, C2, C3, C4 and C5. At this moment, if the menu C needs to be switched to a menu D, the finger presses a navigation bar of a transverse primary menu and moves leftwards, and the whole primary menu navigation bar will move leftwards accordingly. Fig. 7 is a diagram of a primary menu in a state of sliding leftwards from a menu C to a menu D according to an example embodiment of the disclosure. As shown in Fig. 7, the primary menus A and B move leftwards, the primary menus D, E and F move leftwards, and the states of the menu C and the subsequent menu of the menu C are kept fixed temporarily. When the displacements of the menus moving leftwards exceed half of the length of a single menu, that is, when the position of the current menu D moves leftwards until less than half of the length of the single menu is only exposed, the menu is released, the menu D quickly slides to the position of the original menu C, the secondary menus D1, D2 and D3 of the menu D are displayed vertically, and the state is switched to the state as shown in Fig. 8.

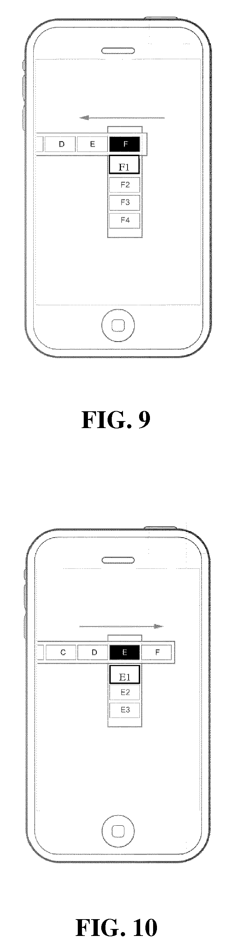

According to the same principle, the finger can continuously slide leftwards to select the menus E and F and instantly display the secondary menus of the menus E and F. Fig. 9 shows that a state of moving leftwards to the end to select the primary menu F, and display secondary menus F1, F2, F3 and F4 of the menu F. At this moment, left contents of the primary menus extend beyond the range of the screen, and over-extended parts are hidden. The primary menus can be shown one by one in a mode of pressing the menus to move rightwards, and the menus can be selected when releasing the menus.

Fig. 10 shows that the menus are pressed for a long time to move rightwards, when the menu E is in a focus state, a finger is loosened to release the menu so that the primary menu E is selected, and secondary menus E1, E2 and E3 of the menu E are displayed vertically and simultaneously.

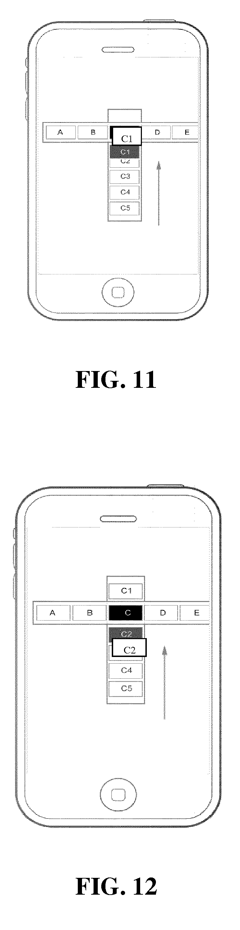

The secondary menus are selected by up-down sliding of the finger, so as to make the menu items move to reach assigned focuses. The focuses of the secondary menus are located at a position of a first menu item below the primary menus. As shown in Fig. 3, a selected item of the primary menus in a current default state is C, and the secondary menus of the menu C are C1, C2, C3, C4 and C5. A focus state of the secondary menu is C1, and at this moment, a software interface has executed functions controlled by the C1. At this moment, if a certain secondary menu needs to be selected, the finger presses a navigation bar of a longitudinal secondary menu and moves upwards, and the whole secondary menu navigation bar will move upwards accordingly. As shown in Fig. 11, the primary menus are kept fixed, a currently selected state is the menu C all the time, the secondary menus C2, C3, C4 and C5 move upwards, and the state of the menu C1 is kept fixed temporarily. When the displacements of the menus moving upwards exceed half of the length of a single menu, that is, when the position of the current menu C2 moves upwards until less than half of the length of the single menu is only exposed, the menu is released, the menu C2 quickly slides to the position of the original menu C1, the menu C1 moves to a position above the primary menus, the state is switched to the state as shown in Fig. 12, a focus of the secondary menus is C2, and at this moment, the software interface has executed functions controlled by the C2.

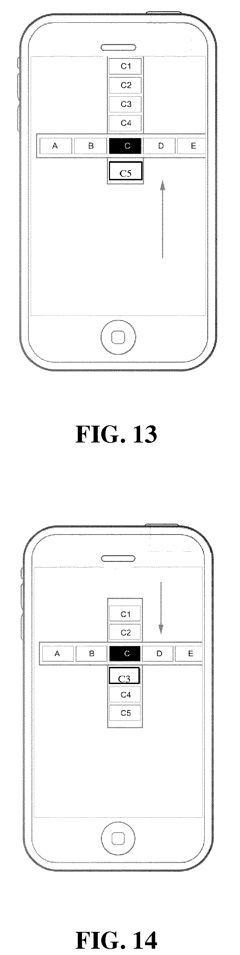

According to the same principle, the finger can continuously slide upwards to select the menus C3, C4 and C5. Fig. 13 shows that a state of moving upwards to the end to select the secondary menu C5, and at this moment, the software interface has executed functions controlled by the C5. At this moment, upside contents of the secondary menus extend beyond the range of the screen, and over-extended parts are hidden. The secondary menus can be shown one by one in a mode of pressing the menus to move downwards, the menus are released to select the secondary menus.

Fig. 14 shows that the focus of the secondary menus is in a C5 state under the state of Fig. 10, the menus are pressed for a long time to move downwards, when the menu C3 is in a focus state, the finger is loosened to release the menu so that the secondary menu C3 is selected, and at this moment, functions controlled by the C3 are executed by a software design interface.

According to the example embodiment, the primary menu and the secondary menu are displayed within a screen range simultaneously, the primary menu is pressed by the finger for a long time to transversely move, when a menu needing to be selected enters a focus area, and the finger is loosened to release the menu so as to select the primary menu. When the primary menu is selected, the secondary menu is synchronously switched at once. The secondary menu is pressed by the finger for a long time to longitudinally move, when a menu needing to be selected enters a focus area assigned by the secondary menu, and the finger is loosened to release the menu so as to select the secondary menu. After the secondary menu is selected, a current page executes function operations controlled by the secondary menu at once. A very visual effect is achieved. The menus are well operated via mobile gestures, and a user interface is effective while being clicked, thereby greatly improving a usage effect of the interface.

The example embodiment provides a method for operating the cross interaction function menu and provides a menu style. The primary menu and the secondary menu are enabled to be displayed in a screen simultaneously, menu selection is realized in a humanized operation mode of sliding a menu to a focus state via the finger, any levels and any menu items can be switched quite conveniently and quickly, the secondary menu can be selected, and the interface immediately gives a feedback, thereby being quite convenient for the user interface needing a great number of setting functions, providing the user with a very visual menu display and operation mode, avoiding troubles of screen-by-screen searching and screen-by-screen returning, increasing the operation speed of the user and improving the operation favour of the user.

Obviously, those skilled in the art should know that each of the mentioned components or steps of the disclosure may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device; and under some circumstances, the shown or described steps may be executed in different orders, or may be independently manufactured as each integrated circuit module, or multiple modules or steps thereof may be manufactured to be single integrated circuit module, thus to be realized. In this way, the disclosure is not restricted to any particular hardware and software combination.

The descriptions above are only the preferable embodiment of the disclosure, which are not used to restrict the disclosure, for those skilled in the art, the disclosure may have various changes and variations. Any amendments, equivalent substitutions, improvements, etc. within the principle of the disclosure are all included in the scope of the protection of the disclosure.

### Industrial Applicability

The technical solution provided by the embodiments of the disclosure can be applied to the communications field, a problem of inconvenience in an interface operation is solved, the operation efficiency of the user is increased, and the experience of the user is improved.

## Claims

1. A method for processing a menu, comprising:
receiving a first trigger signal, wherein the first trigger signal acts on a menu item of a primary menu displayed in a terminal screen; and
in response to the first trigger signal, invoking a secondary menu, and displaying the secondary menu on the terminal screen, wherein the primary menu and the secondary menu are displayed on the terminal screen simultaneously.

2. The method as claimed in claim 1, wherein the primary menu is displayed on the terminal screen in a line, and the secondary menu is displayed on the terminal screen in a column.

3. The method as claimed in claim 2, wherein the primary menu and the secondary menu are crossways located on the menu item.

4. The method as claimed in claim 2, wherein the method further comprises:
receiving a second trigger signal; and in response to the second trigger signal, triggering the primary menu to move in a direction parallel to the line; and/or,
receiving a third trigger signal; and in response to the third trigger signal, triggering the secondary menu to move in a direction parallel to the column.

5. The method as claimed in claim 4, wherein the second trigger signal and/or the third trigger signal are trigger signals generated by sliding of a contact object on the terminal screen.

6. The method as claimed in claim 5, wherein in response to the second trigger signal, a predetermined menu item in the primary menu is moved to a predetermined focus, wherein the movement of the predetermined menu item to the predetermined focus triggers the first trigger signal.

7. A device for processing a menu, comprising:
a first receiving component, configured to receive a first trigger signal, wherein the first trigger signal acts on a menu item of a primary menu displayed in a terminal screen; and
an invoking component, configured to invoke a secondary menu and display the secondary menu on the terminal screen in response to the first trigger signal, wherein the primary menu and the secondary menu are displayed on the terminal screen simultaneously.

8. The device as claimed in claim 7, wherein the primary menu is displayed on the terminal screen in a line, and the secondary menu is displayed on the terminal screen in a column.

9. The device as claimed in claim 8, wherein the primary menu and the secondary menu are crossways located on the menu item.

10. The device as claimed in claim 8, wherein the device further comprises:
a second receiving component, configured to receive a second trigger signal; and a first trigger component, configured to trigger, in response to the second trigger signal, the primary menu to move in a direction parallel to the line; and/or
a third receiving component, configured to receive a third trigger signal; and a second trigger component, configured to trigger, in response to the third trigger signal, the secondary menu to move in a direction parallel to the column.

11. The device as claimed in claim 10, wherein the second trigger signal and/or the third trigger signal are a trigger signals generated by sliding of a contact object on the terminal screen.

12. The device as claimed in claim 11, wherein the first trigger component is configured to move, in response to the second trigger signal, a predetermined menu item in the primary menu to a predetermined focus, wherein the movement of the predetermined menu item to the predetermined focus triggers the first trigger signal.
